# EUROPEAN PATENT APPLICATION

(11) **EP 4 660 034 A1**
(43) Date of publication of application: **10.12.2025**
(21) Application number: 24752659.3
(22) Date of filing: 15.01.2024
(51) Int. Cl.: B60W 10/08, B60W 50/00, B60W 60/00, B60W 40/105, B60L 15/20, B60L 15/00

(54) **INTELLIGENT DRIVING METHOD, INTELLIGENT DRIVING APPARATUS, AND COMPUTER-READABLE STORAGE MEDIUM**

(30) Priority: 06.02.2023 CN 202310125136
(71) Applicant: Shenzhen Yinwang Intelligent Technologies Co., Ltd., Shenzhen, Guangdong 518110 (CN)
(72) Inventor: CHEN, Zhijie, Shenzhen, Guangdong 518129 (CN); XIN, Fulong, Shenzhen, Guangdong 518129 (CN); CHEN, Yongshang, Shenzhen, Guangdong 518129 (CN)
(74) Representative: Gill Jennings & Every LLP
(86) International application number: PCT/CN2024/072350
(87) International publication number: WO 2024/164801

(57) **Abstract**

An intelligent driving method, an intelligent driving apparatus, and a computer-readable storage medium are disclosed. The intelligent driving method includes: an intelligent driving controller of a vehicle receives perception information; determines, based on the perception information, a speed change instruction for changing a speed of the vehicle; and sends the speed change instruction to a motor control unit coupled to the intelligent driving controller. According to embodiments of this disclosure, an acceleration response speed and a braking response speed in an intelligent driving mode can be improved.

## Description

### TECHNICAL FIELD

This disclosure mainly relates to the field of intelligent driving. More specifically, this disclosure relates to an intelligent driving method, an intelligent driving apparatus, and a computer-readable storage medium.

### BACKGROUND

With rapid development of levels of driving automation of vehicles, more vehicles are provided with intelligent driving functions. The vehicle with the intelligent driving function is equipped with advanced devices such as sensors, controllers, actuators, and communication modules, to assist a driver in manipulating the vehicle, and even to completely replace the driver to implement an autonomous driving. Intelligent driving may be classified into levels L0 to L5 based on an international classification of intelligent driving. The level L0 indicates no driving automation. The driver needs to be responsible for starting, braking, operating, and road condition observing. With any driver assistance technology, a person still needs to control the vehicle. The level L1 indicates driver assistance that is single function-level automation. The driver cannot operate without a hand or a foot, and is still responsible for driving safety. However, some functions are automatically performed, such as adaptive cruise control, emergency braking assistance, and lane keeping. The level L2 indicates partial driving automation. The driver may not operate the vehicle in some preset environments, that is, the hand and the foot are not required for control. However, the driver still needs to be responsible for driving safety, and must be ready to take over control of the vehicle in a short time at any time. The level L3 indicates conditional automation. To be specific, on preset roads such as a highway and an urban road with a small pedestrian flow, the vehicle autonomously drives and is responsible for driving safety. The driver does not need to monitor a road condition, but still needs to take over the vehicle at some time. The level L4 indicates high automation. An autonomous driving system completes all driving operations according to system requests, and the driver does not necessarily need to respond to all system requests. The level L5 indicates full automation. The autonomous driving system completes all driving operations, and the driver takes over the vehicle when possible. In the level L1 to the level L3, tasks of monitoring the road condition and responding are jointly completed by the driver and a system, and the driver needs to take over a dynamic driving task. However, in the level L4 and the level L5, as the levels of intelligent driving are high, the driver can completely change roles to that of a passenger.

In an intelligent driving vehicle, when a speed change operation (including acceleration and braking) needs to be performed, an intelligent driving controller installed in the vehicle automatically determines, based on an actual driving scenario, whether the speed change operation needs to be performed and when the speed change operation is to be performed. Therefore, the speed change operation of the intelligent driving vehicle imposes a higher requirement on a good response feedback of the vehicle. Although a plurality of ideas have been proposed in existing intelligent driving control solutions to implement speed change of the vehicle, the existing solutions still have many disadvantages in a control response speed and control precision of the vehicle. How to make a control response of the vehicle more rapid and accurate and improve response precision and quality remains a challenge for a designer.

### SUMMARY

To quickly and accurately adjust a speed of a vehicle, embodiments of this disclosure provide an intelligent driving method, an intelligent driving apparatus, and a computer-readable storage medium.

According to a first aspect of this disclosure, an intelligent driving method is provided. The intelligent driving method includes: receiving, by an intelligent driving controller of a vehicle, perception information; determining, based on the perception information, a speed change instruction for changing a speed of the vehicle; and sending the speed change instruction to a motor control unit coupled to the intelligent driving controller.

According to the implementation of this disclosure, the intelligent driving controller is directly connected to the motor control unit, so that signal transmission efficiency can be improved. In this way, the speed change instruction can be executed by the vehicle more quickly, to improve a response speed of the vehicle.

In some implementations, the determining a speed change instruction includes: determining, based on the perception information, an acceleration instruction for accelerating the vehicle. In addition, the sending the speed change instruction includes: sending the acceleration instruction to the motor control unit, to accelerate the vehicle. In this manner, in an acceleration process, an acceleration delay can be greatly shortened, so that a sense of hysteresis during acceleration of the vehicle is reduced.

In some implementations, the determining a speed change instruction includes: calculating, based on the perception information, a deceleration torque for decelerating the vehicle; determining one portion of the deceleration torque as a regenerative deceleration torque; and determining, based on the regenerative deceleration torque, a deceleration instruction for decelerating the vehicle. In addition, the sending the speed change instruction includes: sending, to the motor control unit, the deceleration instruction that indicates the regenerative deceleration torque, to decelerate the vehicle. In this manner, in a braking process, a braking response speed can be improved, and a braking distance can be shortened.

In some implementations, the determining a speed change instruction further includes: determining the other portion of the deceleration torque as a hydraulic deceleration torque. In addition, the method further includes: sending, to a brake controller coupled to the intelligent driving controller, a torque signal that indicates the hydraulic deceleration torque, to decelerate the vehicle. In this manner, energy recovery performance of the vehicle during braking can be improved.

In some implementations, the perception information is received from a perception module coupled to the intelligent driving controller. In this manner, the vehicle can also implement a rapid speed change response without intervention of a driver.

According to a second aspect of this disclosure, an intelligent driving method is provided. The intelligent driving method includes: receiving, by a motor control unit of a vehicle, a speed change instruction from an intelligent driving controller coupled to the motor control unit, where the speed change instruction is determined at the intelligent driving controller based on received perception information; and controlling a rotational speed of a motor of the vehicle according to the speed change instruction.

In some implementations, the receiving a speed change instruction includes: receiving an acceleration instruction for accelerating the vehicle, where the acceleration instruction is determined based on the perception information. In addition, the controlling a rotational speed of a motor includes: controlling, according to the acceleration instruction, the motor to accelerate, to accelerate the vehicle.

In some implementations, the receiving a speed change instruction includes: receiving a deceleration instruction that indicates a regenerative deceleration torque, where the regenerative deceleration torque is one portion of a deceleration torque for decelerating the vehicle, and the deceleration torque is calculated based on the perception information. In addition, the controlling a rotational speed of a motor includes: controlling, according to the deceleration instruction, the motor to decelerate, to decelerate the vehicle.

In some implementations, the method further includes: receiving, by the motor control unit from a brake controller coupled to the motor control unit, a torque signal that indicates a hydraulic deceleration torque, where the hydraulic deceleration torque is the other portion of the deceleration torque; and controlling, based on the torque signal, the motor to decelerate, to decelerate the vehicle.

In some implementations, the method further includes: controlling the rotational speed of the motor of the vehicle based on a position of an accelerator pedal or a brake pedal of the vehicle, to decelerate the vehicle. In this way, the implementations of this disclosure are also friendlily compatible with a manual driving architecture, so that the driver can intervene when necessary, to control the vehicle to change a speed.

According to a third aspect of this disclosure, an intelligent driving apparatus is provided. The intelligent driving apparatus includes: an information receiving module, configured to receive perception information by an intelligent driving controller of a vehicle; an instruction determining module, configured to determine, based on the perception information, a speed change instruction for changing a speed of the vehicle; and an instruction sending module, configured to send the speed change instruction to a motor control unit coupled to the intelligent driving controller.

In some implementations, the instruction determining module is configured to determine, based on the perception information, an acceleration instruction for accelerating the vehicle. In addition, the instruction sending module is configured to send the acceleration instruction to the motor control unit, to accelerate the vehicle.

In some implementations, the instruction determining module is configured to calculate, based on the perception information, a deceleration torque for decelerating the vehicle; determine one portion of the deceleration torque as a regenerative deceleration torque; and determine, based on the regenerative deceleration torque, a deceleration instruction for decelerating the vehicle. In addition, the instruction sending module is configured to send, to the motor control unit, the deceleration instruction that indicates the regenerative deceleration torque, to decelerate the vehicle.

In some implementations, the instruction determining module is further configured to determine the other portion of the deceleration torque as a hydraulic deceleration torque. In addition, the instruction sending module is further configured to send, to a brake controller coupled to the intelligent driving controller, a torque signal that indicates the hydraulic deceleration torque, to decelerate the vehicle.

In some implementations, the perception information is received from a perception module coupled to the intelligent driving controller.

According to a fourth aspect of this disclosure, an intelligent driving apparatus is provided. The intelligent driving apparatus includes: an instruction receiving module, configured to receive, by a motor control unit of a vehicle, a speed change instruction from an intelligent driving controller coupled to the motor control unit, where the speed change instruction is determined at the intelligent driving controller based on received perception information; and a motor control module, configured to control a rotational speed of a motor of the vehicle according to the speed change instruction.

In some implementations, the instruction receiving module is further configured to receive an acceleration instruction for accelerating the vehicle, where the acceleration instruction is determined based on the perception information. In addition, the motor control module is further configured to control, according to the acceleration instruction, the motor to accelerate, to accelerate the vehicle.

In some implementations, the instruction receiving module is further configured to receive a deceleration instruction that indicates a regenerative deceleration torque, where the regenerative deceleration torque is one portion of a deceleration torque for decelerating the vehicle, and the deceleration torque is calculated based on the perception information. In addition, the motor control module is further configured to control, according to the deceleration instruction, the motor to decelerate, to decelerate the vehicle.

In some implementations, the intelligent driving apparatus further includes: a signal receiving module, configured to receive, by the motor control unit from a brake controller coupled to the motor control unit, a torque signal that indicates a hydraulic deceleration torque, where the hydraulic deceleration torque is the other portion of the deceleration torque. The motor control module is further configured to control, based on the torque signal, the motor to decelerate, to decelerate the vehicle.

In some implementations, the motor control unit is further configured to control the rotational speed of the motor of the vehicle based on a position of an accelerator pedal or a brake pedal of the vehicle, to decelerate the vehicle.

According to a fifth aspect of this disclosure, a computer-readable storage medium is provided. The computer-readable storage medium stores a computer program. When the computer program is executed by a processor, the method according to the first aspect or the second aspect of this disclosure is implemented.

These aspects and another aspect of this disclosure are easier to understand and more concise in descriptions in the following (a plurality of) implementations.

### BRIEF DESCRIPTION OF DRAWINGS

With reference to the accompanying drawings and the following detailed descriptions, the foregoing and other features, advantages, and aspects of embodiments of this disclosure become clearer. In the accompanying drawings, same or similar reference numerals represent same or similar elements. The accompanying drawings are not necessarily drawn in proportion.
FIG. 1 is a diagram of an architecture of a speed control system of a vehicle according to an example implementation of this disclosure;
FIG. 2 is a flowchart of speed adjustment in a vehicle acceleration scenario according to an example implementation of this disclosure;
FIG. 3 is a flowchart of speed adjustment in a vehicle braking scenario according to an example implementation of this disclosure;
FIG. 4 is a flowchart of a vehicle speed adjustment method according to an example implementation of this disclosure;
FIG. 5 is a flowchart of a vehicle speed adjustment method according to another example implementation of this disclosure;
FIG. 6 is a block diagram of a vehicle speed adjustment apparatus according to an example implementation of this disclosure;
FIG. 7 is a block diagram of another vehicle speed adjustment apparatus according to another example implementation of this disclosure; and
FIG. 8 is a block diagram of a device that can be used to implement a plurality of example implementations of this disclosure.

### DESCRIPTION OF EMBODIMENTS

Embodiments of this disclosure are described in more detail in the following with reference to the accompanying drawings. Although some embodiments of this disclosure are shown in the accompanying drawings, it should be understood that this disclosure can be implemented in various forms, and should not be construed as being limited to embodiments described herein, and instead, these embodiments are provided for a more thorough and complete understanding of this disclosure. It should be understood that the accompanying drawings and embodiments of this disclosure are merely used as examples and are not intended to limit the protection scope of this disclosure.

In the descriptions of embodiments of this disclosure, the term "including" and similar terms thereof shall be understood as non-exclusive inclusions, that is, "including but not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below.

As mentioned above, in an existing design solution of an intelligent driving vehicle, although acceleration and deceleration functions of the vehicle can be implemented, requirements on a quick response of a driving torque and a precise closed-loop of a braking torque cannot be met. Specifically, in a current control system of the intelligent driving vehicle, after obtaining an acceleration instruction and a braking instruction through calculation, an intelligent driving controller separately sends the acceleration instruction and the braking instruction to a vehicle control unit and a brake controller through a bus, to separately implement acceleration and braking of the vehicle. When the vehicle needs to accelerate, the acceleration instruction is processed by the vehicle control unit, and then sent to a motor control unit to control a motor to implement acceleration. Because the acceleration instruction needs to be first processed by the vehicle control unit before being sent to the motor control unit, a power response delay is prolonged, resulting in a problem like insufficient speed tracking. Consequently, a driver and a passenger have a feeling of an acceleration delay, and driving and ride experience is poor.

Similarly, when an existing intelligent driving vehicle needs to decelerate, a vehicle control unit receives an energy recovery request. The vehicle control unit sends an energy recovery instruction to a motor control unit to control the motor to implement energy recovery, and finally completes control on the motor control unit. In the conventional technology, there is also a disadvantage in a deceleration scenario. Because the foregoing braking control process needs to be first performed by the vehicle control unit before reaching the motor control unit, not only a braking response delay is prolonged, but also a problem of an insufficient response or overshoot of a total torque including energy recovery braking and hydraulic braking is likely to occur. This not only affects experience in intelligent driving and cruise scenarios, but also may cause a longer braking distance more possibly. Therefore, driving safety is affected.

To resolve at least some foregoing problems existing in the current intelligent driving control architecture, embodiments of this disclosure provide an architecture of an intelligent driving vehicle in which an intelligent driving controller is directly connected to a motor control unit and the intelligent driving controller directly controls the motor control unit, to improve a control requirement on the intelligent driving vehicle.

It should be noted that, in context of this disclosure, the term "vehicle" may be in various forms, for example, an electric vehicle, or may be a hybrid vehicle. In some embodiments, the vehicle may be a car, a truck, a trailer, a motorcycle, a bus, an agricultural vehicle, an entertainment vehicle, a construction vehicle, an engineering vehicle, or the like. In some embodiments, the vehicle may be a household vehicle, a passenger vehicle of an operational nature, a freight vehicle of an operational nature, or the like. In some embodiments, the vehicle may be a vehicle provided with a specific autonomous driving capability. The autonomous driving capability may include but is not limited to an assisted driving capability, a semi-autonomous driving capability, a highly autonomous driving capability, or a fully autonomous driving capability. In conclusion, a person skilled in the art may envisage implementing embodiments of this disclosure on another type of vehicle.

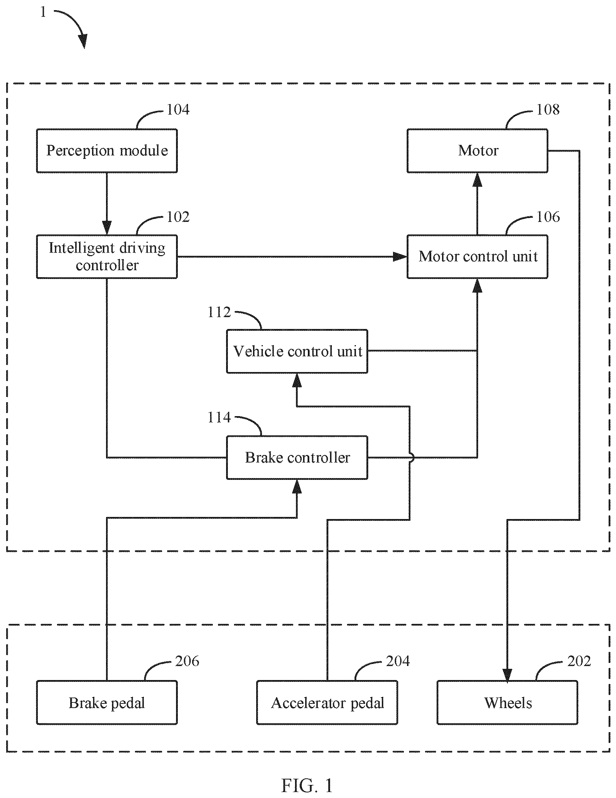

With reference to FIG. 1 to FIG. 8, the following describes more details of example embodiments of this disclosure. First, FIG. 1 is a diagram of an entire architecture of a vehicle speed adjustment system 1 according to an example implementation of this disclosure. As shown in FIG. 1, the system 1 mainly includes an intelligent driving controller 102, a motor control unit (MCU) 106, a vehicle control unit (VCU) 112, and a brake controller 114. The system 1 further includes components disposed on a vehicle chassis, such as wheels 202, an accelerator pedal 204, and a brake pedal 206. As shown in the figure, the intelligent driving controller 102 is coupled to a perception module 104. The perception module 104 may include various types of sensors, such as a lidar and a camera, to sense an actual running status of a vehicle, including sensing a driving speed of the vehicle, a current road condition for the vehicle, a status of another vehicle, a sign and a marking line on a road, and the like. In an autonomous driving scenario, the intelligent driving controller 102 may control a driving status of the vehicle using a signal fed back by the perception module 104. For example, in some embodiments, if the signal fed back by the perception module 104 indicates that there are a small quantity of vehicles on a current road, and a current vehicle speed is less than a road speed limit, the intelligent driving controller 102 may make a decision to accelerate the vehicle. In some other embodiments, if the perception module 104 senses that there is a traffic event participant including a motor vehicle, a non-motor vehicle, a pedestrian, or the like in front of the vehicle, the intelligent driving controller 102 may make a decision to decelerate the vehicle. Certainly, the scenario described herein is merely illustrative and not restrictive.

Still refer to FIG. 1. The intelligent driving controller 102 is directly coupled to the motor control unit 106, so that a signal can be directly transmitted between the intelligent driving controller 102 and the motor control unit 106. It should be noted that the terms "coupling", "connection", and the like may indicate that related components are associated with each other in different forms, including a wired manner for a connection and a wireless manner for the connection, and including various known connection manners and another connection manner developed in the future, for example, an in-vehicle Wi-Fi connection manner. Because the motor control unit 106 is coupled to the intelligent driving controller 102, the motor control unit 106 can directly adjust a rotational speed of a motor 108 based on a signal from the intelligent driving controller 102 without participation of another apparatus. The adjustment is finally performed on the wheels 202, to change a speed of the vehicle in an intelligent driving case. This direct coupling manner brings great convenience and performance improvement. This is described in detail below. Embodiments of this disclosure are particularly applicable to the autonomous driving scenario.

In addition, embodiments of this disclosure can also be compatible with a manual driving architecture. In a manual driving scenario, a driver may intervene in and adjust the speed of the vehicle by stepping on the accelerator pedal 204 or the brake pedal 206 in a driving process. The accelerator pedal 204 is coupled to the vehicle control unit 112, and the brake pedal 206 is coupled to the brake controller 114. As shown in the figure, the motor control unit 106 is also coupled to the vehicle control unit 112 and the brake controller 114, and can adjust the rotational speed of the motor 108 based on signals from these controllers. The adjustment is finally performed on the wheels 202, to adjust the speed of the vehicle in a manual driving case.

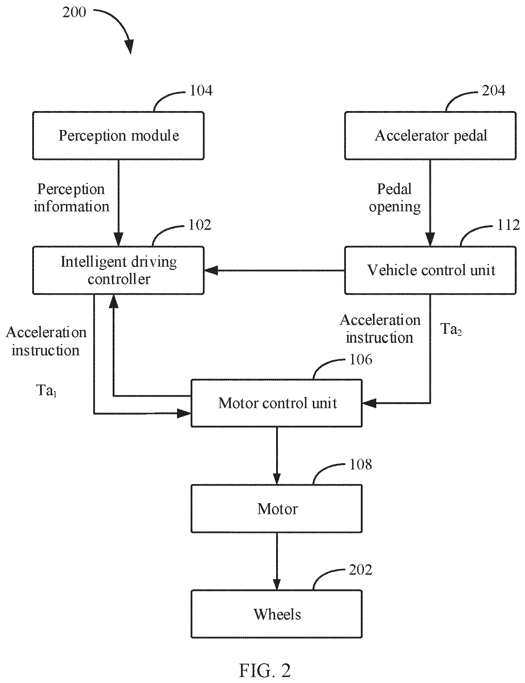

With reference to FIG. 2, the following describes a procedure 200 according to an example embodiment of this disclosure by using acceleration as an example. In the autonomous driving scenario, the perception module 104 may transmit perception information to the intelligent driving controller 102. The intelligent driving controller 102 may prepare to perform an acceleration action based on the perception information from the perception module 104. In the intelligent driving controller 102, a speed change torque may be obtained based on the perception information, and a speed change instruction that indicates the speed change torque may be transmitted to the motor control unit 106. In an acceleration scenario, the obtained speed change torque is a target acceleration torque Ta₁, and the speed change instruction is an acceleration instruction. A person skilled in the art understands that the target acceleration torque Ta₁ may be determined based on various technologies that are currently known and/or to be developed in the future. After obtaining the target acceleration torque Ta₁ through calculation, the intelligent driving controller 102 directly sends, to the motor control unit 106, the acceleration instruction that indicates the target acceleration torque Ta₁. After receiving the acceleration instruction, the motor control unit 106 controls the motor 108 of the vehicle to accelerate, and finally accelerates the wheels 202 on the chassis 20 of the vehicle, to accelerate the vehicle.

According to this embodiment of this disclosure, in an acceleration process, the acceleration instruction that is calculated and that indicates the target acceleration torque Ta₁ is directly sent to the motor control unit 106 by the intelligent driving controller 102, instead of being forwarded via the vehicle control unit 112 as in an existing solution. In this manner, the intelligent driving controller 102 can more directly and efficiently control a torque of the motor 108. This helps greatly shorten an acceleration delay of the vehicle, thereby implementing a quick and accurate acceleration response of the vehicle, and improving driving experience of intelligent driving.

In some embodiments, the intelligent driving controller 102 may learn of a current actual motor torque of the vehicle via the vehicle control unit 112, and adjust the torque of the motor 108 of the vehicle based on a difference between the actual motor torque and the target acceleration torque Ta₁. In this way, the actual motor torque can finally reach the target acceleration torque Ta₁, to implement closed-loop control. In some other embodiments, the intelligent driving controller 102 may alternatively learn of a current actual motor torque of the vehicle via the motor control unit 106.

Still refer to FIG. 2. In the manual driving scenario, or when the driver manually intervenes in an autonomous driving mode, the driver steps on the accelerator pedal 204 disposed on the chassis 20. The vehicle control unit 112 can obtain a target acceleration torque Ta₂ through calculation based on a position of the stepped accelerator pedal 204, and send an acceleration instruction that indicates the target acceleration torque Ta₂ to the motor control unit 106. After receiving the acceleration instruction, the motor control unit 106 may similarly control the motor 108 of the vehicle to accelerate, and finally accelerates the vehicle.

According to this embodiment of this disclosure, the intelligent driving controller 102 is directly connected to the motor control unit 106 in hardware, and communication transmission between the intelligent driving controller 102 and the motor control unit 106 is implemented. This improves a response speed and driving experience of autonomous driving, and can also be well compatible with the manual driving architecture, without greatly changing an existing manual driving structure. In this way, design costs and complexity of the system can be effectively controlled and reduced.

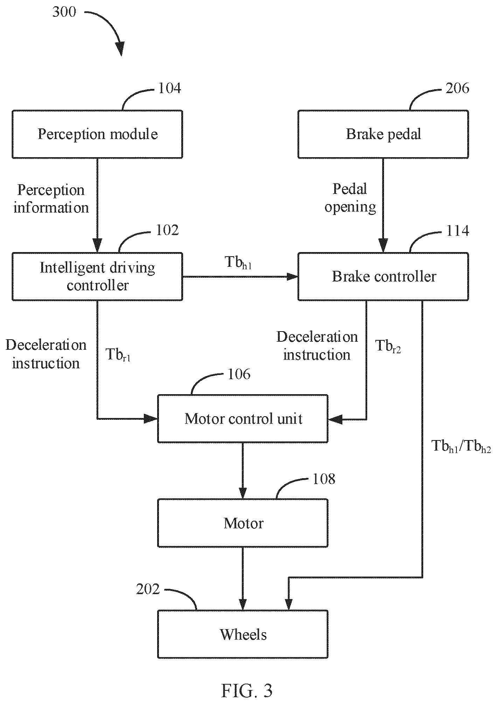

With reference to FIG. 3, the following describes a procedure 300 according to an example embodiment of this disclosure by using deceleration braking as an example. In the autonomous driving scenario, the intelligent driving controller 102 may prepare to perform a braking action based on perception information from the perception module 104. In the intelligent driving controller 102, a speed change torque may be obtained based on the perception information, and a speed change instruction that indicates the speed change torque may be transmitted to the motor control unit 106. In a deceleration braking scenario, the obtained speed change torque is a target deceleration torque Tb₁, and the speed change instruction is a deceleration instruction. A person skilled in the art understands that the target deceleration torque Tb₁ may be determined based on various technologies that are currently known and/or developed in the future. After obtaining the target deceleration torque Tb₁ through calculation, the intelligent driving controller 102 may divide the target deceleration torque Tb₁ into a target regenerative deceleration torque Tbᵣ₁ and a target hydraulic deceleration torque Tbₕ₁, that is, Tb₁ = Tbᵣ₁ + Tbₕ₁, where a deceleration instruction that indicates the target regenerative deceleration torque Tbᵣ₁ is directly sent to the motor control unit 106. After receiving the deceleration instruction, the motor control unit 106 controls the motor 108 of the vehicle to decelerate, and finally decelerates the wheels 202 of the vehicle, to decelerate and brake the vehicle. In addition, a signal that indicates the target hydraulic deceleration torque Tbₕ₁ is sent to the brake controller 114. The brake controller 114 can control, based on the signal, a hydraulic brake assembly to establish a hydraulic brake torque, perform braking on brake discs of the wheels 202 via a hydraulic transmission system, and finally decelerate and brake the vehicle.

According to this embodiment of this disclosure, in a deceleration braking process, after obtaining the target deceleration torque Tb₁ through calculation, the intelligent driving controller 102 divides the target deceleration torque Tb₁ into the target regenerative deceleration torque Tbᵣ₁ and the target hydraulic deceleration torque Tbₕ₁, and then directly sends the target regenerative deceleration torque Tbᵣ₁ to the motor control unit 106, instead of implementing the foregoing process via the brake controller 114 as in the conventional technology. In this way, a braking torque response is more rapid and accurate, and response precision and quality can be improved. In addition, because a braking response is rapid, a braking distance can be greatly shortened, to improve driving safety. In addition, energy recovery efficiency in a braking process is improved.

Still refer to FIG. 3. In the manual driving scenario, or when the driver manually intervenes in an autonomous driving mode, the driver steps on the brake pedal 206 disposed on the chassis 20. The brake controller 114 can obtain a target deceleration torque Tb₂ through calculation based on a position of the stepped brake pedal 206. The brake controller 114 may divide the target deceleration torque Tb₂ into a target hydraulic deceleration torque Tbₕ₂ and a target regenerative deceleration torque Tbᵣ₂, that is, Tb₂ = Tbᵣ₂ + Tbₕ₂, where a deceleration instruction that indicates the target regenerative deceleration torque Tbᵣ₂ is directly sent to the motor control unit 106. Similar to that in the autonomous driving scenario, after receiving the deceleration instruction, the motor control unit 106 controls the motor 108 of the vehicle to decelerate, and finally decelerates the motor 108, to decelerate and brake the vehicle. In addition, a signal that indicates the target hydraulic deceleration torque Tbₕ₂ is sent to the brake controller 114. The brake controller 114 can control, based on the signal, a hydraulic brake assembly to establish a hydraulic brake torque, then perform braking on brake discs of the wheels 202 via a hydraulic transmission system, thereby decelerating and braking the vehicle. According to this embodiment of this disclosure, in a braking control process, the manual driving architecture can also be well compatible, so that increases in costs and complexity due to a change to an existing design can be avoided.

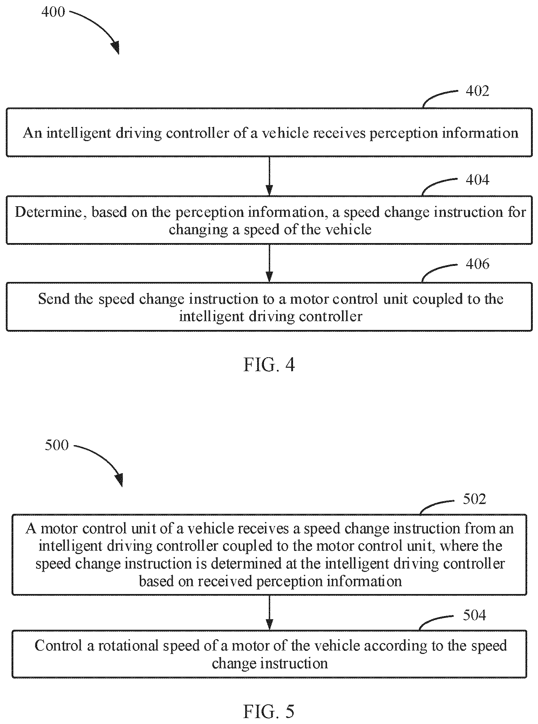

FIG. 4 is a flowchart of an intelligent driving method 400 according to an example implementation of this disclosure. As shown in the figure, in a block 402, the intelligent driving method 400 includes: receiving, by the intelligent driving controller 102 of the vehicle, perception information. In a block 404, the intelligent driving method 400 includes: determining, based on the perception information, a speed change instruction for changing a speed of the vehicle. In a block 406, the intelligent driving method 400 includes: sending the speed change instruction to the motor control unit 106 coupled to the intelligent driving controller 102.

In some embodiments, the determining a speed change instruction may include: determining, based on the perception information, an acceleration instruction for accelerating the vehicle. In addition, the sending the speed change instruction includes: sending the acceleration instruction to the motor control unit 106, to accelerate the vehicle.

In some embodiments, the determining a speed change instruction may include: calculating, based on the perception information, a deceleration torque Tb₁ for decelerating the vehicle; determining one portion of the deceleration torque Tb₁ as a regenerative deceleration torque Tbᵣ₁; and determining, based on the regenerative deceleration torque Tbᵣ₁, a deceleration instruction for decelerating the vehicle. In addition, the sending the speed change instruction includes: sending, to the motor control unit 106, a deceleration instruction that indicates the regenerative deceleration torque Tbᵣ₁, to decelerate the vehicle.

In some embodiments, the determining a speed change instruction may further include: determining the other portion of the deceleration torque Tb₁ as a hydraulic deceleration torque Tbₕ₁. In addition, the intelligent driving method 400 further includes: sending, to the brake controller 114 coupled to the intelligent driving controller 102, a torque signal that indicates the hydraulic deceleration torque Tbₕ₁, to decelerate the vehicle.

In some embodiments, the perception information is received from the perception module 104 coupled to the intelligent driving controller 102.

FIG. 5 is a flowchart of an intelligent driving method 500 according to another example implementation of this disclosure. In a block 502, the intelligent driving method 500 includes: receiving, by the motor control unit 106 of the vehicle, a speed change instruction from the intelligent driving controller 102 coupled to the motor control unit 106, where the speed change instruction is determined at the intelligent driving controller 102 based on received perception information. In a block 504, the intelligent driving method 500 further includes: controlling a rotational speed of the motor 108 of the vehicle according to the speed change instruction.

In some embodiments, the receiving a speed change instruction may include: receiving an acceleration instruction for accelerating the vehicle, where the acceleration instruction is determined based on the perception information. In addition, the controlling a rotational speed of the motor 108 includes: controlling, according to the acceleration instruction, the motor 108 to accelerate, to accelerate the vehicle.

In some embodiments, the receiving a speed change instruction may include: receiving a deceleration instruction that indicates a regenerative deceleration torque Tbᵣ₁, where the regenerative deceleration torque Tbᵣ₁ is one portion of a deceleration torque Tb₁ for decelerating the vehicle, and the deceleration torque Tb₁ is calculated based on the perception information. In addition, the controlling a rotational speed of the motor 108 includes: controlling, according to the deceleration instruction, the motor 108 to decelerate, to decelerate the vehicle.

In some embodiments, the intelligent driving method 500 may further include: receiving, by the motor control unit 106, from the brake controller 114 coupled to the motor control unit 106, a torque signal that indicates a hydraulic deceleration torque Tbₕ₁, where the hydraulic deceleration torque Tbₕ₁ is the other portion of the deceleration torque Tb₁; and controlling, based on the torque signal, the motor 108 to decelerate, to decelerate the vehicle.

In some embodiments, the intelligent driving method 500 may further include: controlling the rotational speed of the motor 108 of the vehicle based on a position of the accelerator pedal or the brake pedal of the vehicle, to decelerate the vehicle.

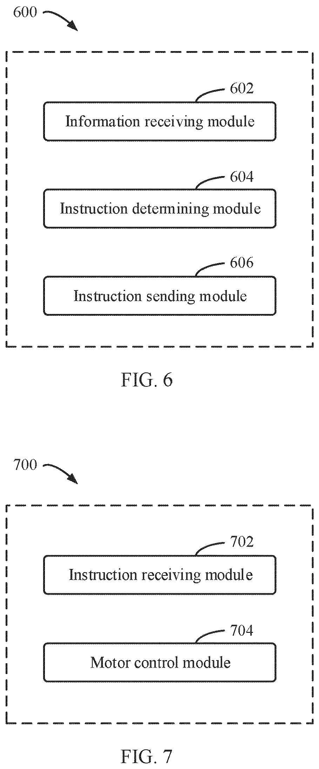

FIG. 6 is a block diagram of an intelligent driving apparatus 600 according to an example implementation of this disclosure. As shown in the figure, the intelligent driving apparatus 600 includes: an information receiving module 602, configured to receive perception information by the intelligent driving controller 102 of the vehicle; an instruction determining module 604, configured to determine, based on the perception information, a speed change instruction for changing a speed of the vehicle; and an instruction sending module 606, configured to send the speed change instruction to the motor control unit 106 coupled to the intelligent driving controller 102.

In some embodiments, the instruction determining module 604 is configured to determine, based on the perception information, an acceleration instruction for accelerating the vehicle. In addition, the instruction sending module 606 is configured to send the acceleration instruction to the motor control unit 106, to accelerate the vehicle.

In some embodiments, the instruction determining module 604 is configured to: calculate, based on the perception information, a deceleration torque Tb₁ for decelerating the vehicle; determine one portion of the deceleration torque Tb₁ as a regenerative deceleration torque Tbᵣ₁; and determine, based on the regenerative deceleration torque Tbᵣ₁, a deceleration instruction for decelerating the vehicle. In addition, the instruction sending module 606 is configured to send, to the motor control unit 106, a deceleration instruction that indicates the regenerative deceleration torque Tbᵣ₁, to decelerate the vehicle.

In some embodiments, the instruction determining module 604 is further configured to determine the other portion of the deceleration torque Tb₁ as a hydraulic deceleration torque Tbₕ₁. In addition, the instruction sending module 606 is further configured to send, to the brake controller 114 coupled to the intelligent driving controller 102, a torque signal that indicates the hydraulic deceleration torque Tbₕ₁, to decelerate the vehicle.

In some embodiments, the perception information is received from the perception module 104 coupled to the intelligent driving controller 102.

FIG. 7 is a block diagram of an intelligent driving apparatus 700 according to another example implementation of this disclosure. As shown in the figure, the intelligent driving apparatus 700 includes: an instruction receiving module 702, configured for the motor control unit 106 of the vehicle to receive a speed change instruction from the intelligent driving controller 102 coupled to the motor control unit 106, where the speed change instruction is determined at the intelligent driving controller 102 based on received perception information; and a motor control module 704, configured to control a rotational speed of the motor 108 of the vehicle according to the speed change instruction.

In some embodiments, the instruction receiving module 702 is further configured to receive an acceleration instruction for accelerating the vehicle, where the acceleration instruction is determined based on the perception information. In addition, the motor control module 704 is further configured to control, according to the acceleration instruction, the motor 108 to accelerate, to accelerate the vehicle.

In some embodiments, the instruction receiving module 702 is further configured to receive a deceleration instruction that indicates a regenerative deceleration torque Tbᵣ₁, where the regenerative deceleration torque Tbᵣ₁ is one portion of a deceleration torque Tb₁ for decelerating the vehicle, and the deceleration torque Tb₁ is calculated based on the perception information. In addition, the motor control module 704 is further configured to control, according to the deceleration instruction, the motor 108 to decelerate, to decelerate the vehicle.

In some embodiments, the intelligent driving apparatus 700 further includes a signal receiving module, configured for the motor control unit 106 to receive a torque signal that indicates a hydraulic deceleration torque Tbₕ₁ from the brake controller 114 coupled to the motor control unit 106, where the hydraulic deceleration torque Tbₕ₁ is the other portion of the deceleration torque Tb₁. The motor control module 704 is further configured to control, based on the torque signal, the motor 108 to decelerate, to decelerate the vehicle.

In some embodiments, the motor control unit 106 is further configured to control the rotational speed of the motor 108 of the vehicle based on a position of the accelerator pedal 204 or the brake pedal 206 of the vehicle, to decelerate the vehicle.

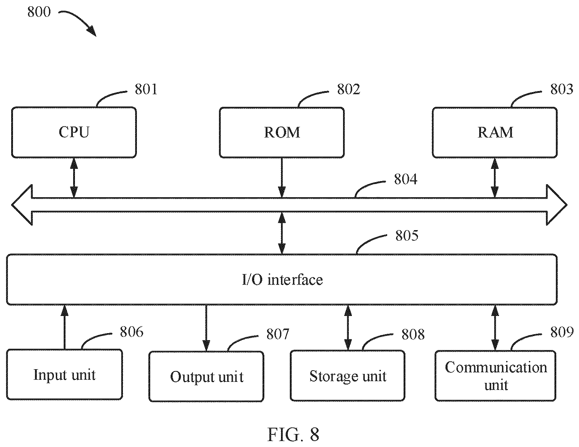

FIG. 8 is a block diagram of a device that can be used to implement a plurality of embodiments of this disclosure. As shown in the figure, the device 800 includes a central processing unit (CPU) 801. The central processing unit 801 may perform various appropriate actions and processing based on computer program instructions stored in a read-only memory (ROM) 802 or computer program instructions loaded from a storage unit 808 to a random access memory (RAM) 803. The RAM 803 may further store various programs and data that are required for an operation of the device 800. The CPU 801, the ROM 802, and the RAM 803 are connected to each other through a bus 804. An input/output (I/O) interface 805 is also connected to the bus 804.

A plurality of components in the device 800 are connected to the I/O interface 805, and include: an input unit 806, for example, a touchscreen or a microphone; an output unit 807, for example, various types of displays or a speaker; the storage unit 808, for example, a magnetic disk or an optical disc; and a communication unit 809, for example, a network interface card, a modem, or a wireless communication transceiver. The communication unit 809 allows the device 800 to exchange information/data with another device through a computer network such as the Internet and/or various telecommunication networks.

The processes and processing described above, for example, the method 400 or the method 500, may be performed by the central processing unit 801. For example, in some embodiments, the method 400 or the method 500 may be implemented as a computer program. The computer software program is tangibly included in a machine-readable medium, for example, the storage unit 808. In some embodiments, a part or all of the computer programs may be loaded and/or mounted on the device 800 via the ROM 802 and/or the communication unit 809. When the computer program is loaded into the RAM 803 and executed by the CPU 801, one or more actions of the method 400 or the method 500 described above may be performed.

The disclosure may be a method, an apparatus, a system, and/or a computer program product. The computer program product may include a computer-readable storage medium, and the computer-readable storage medium carries computer-readable program instructions for performing various aspects of this disclosure.

The computer-readable storage medium can be a tangible device that can retain and store instructions for use by an instruction execution device. The computer-readable storage medium may be, for example, but is not limited to an electrical storage device, a magnetic storage device, an optical storage device, an electromagnetic storage device, a semiconductor storage device, or any suitable combination thereof. More specific examples (a non-exhaustive list) of the computer-readable storage media include: a portable computer disk, a hard disk, a random access memory (RAM), a read-only memory (ROM), an erasable programmable read-only memory (EPROM or flash memory), a static random access memory (SRAM), a portable compact disk read-only memory (CD-ROM), a digital versatile disk (DVD), a memory stick, a floppy disk, a mechanical encoded device such as a punched card or a groove protrusion structure storing instructions on the punched card or the groove protrusion structure, and any suitable combination of the foregoing. The computer-readable storage medium used herein is not to be construed as a transient signal, such as a radio wave or another freely propagating electromagnetic wave, an electromagnetic wave propagating through a waveguide or another transmission medium (such as a light pulse through an optical fiber cable), or an electrical signal transmitted through a wire.

The computer-readable program instructions described herein may be downloaded from the computer-readable storage medium to respective computing/processing devices or to an external computer or external storage device through a network such as the Internet, a local area network, a wide area network, and/or a wireless network. The network may include a copper transmission cable, optical fiber transmission, wireless transmission, a router, a firewall, a switch, a gateway computer and/or an edge server. A network adapter card or network interface in each computing/processing device receives the computer-readable program instructions from the network and forwards the computer-readable program instructions for storage in a computer-readable storage medium in each computing/processing device.

The computer program instructions used to perform operations in this disclosure may be an assembly instruction, an instruction set architecture (ISA) instruction, a machine instruction, a machine-related instruction, microcode, a firmware instruction, status setting data, or source code or target code written in any combination of one or more programming languages. The programming languages include an object-oriented programming language such as Smalltalk and C++, and a conventional procedural programming language such as a "C" language or a similar programming language. The computer-readable program instructions may be executed completely on a user computer, executed partially on the user computer, executed as a standalone software package, executed partially on the user computer and partially on a remote computer, or executed completely on the remote computer or a server. When a remote computer is involved, the remote computer may be connected to a user computer through any type of network, including a local area network (LAN) a wide area network (WAN) or may be connected to an external computer (for example, connected by using an Internet service provider through the Internet). In some embodiments, an electronic circuit, for example, a programmable logic circuit, a field programmable gate array (FPGA), or a programmable logic array (PLA), is customized by using status information of the computer-readable program instructions. The electronic circuit may execute the computer-readable program instructions, to implement the various aspects of this disclosure.

The various aspects of this disclosure are described herein with reference to the flowcharts and/or block diagrams of the method, the apparatus (system), and the computer program product according to embodiments of this disclosure. It should be understood that, each block of the flowcharts and/or block diagrams and a combination of blocks in the flowcharts and/or block diagrams may be implemented by the computer-readable program instructions.

These computer-readable program instructions may be provided to a processing unit of a general-purpose computer, a special-purpose computer, or another programmable data processing apparatus to produce a machine, so that the instructions, when executed by the processing unit of the computer or the another programmable data processing apparatus, create an apparatus for implementing functions/acts specified in one or more blocks in the flowcharts and/or block diagrams. These computer-readable program instructions may alternatively be stored in the computer-readable storage medium. These instructions enable a computer, a programmable data processing apparatus, and/or another device to work in a specific manner. Therefore, the computer-readable medium storing the instructions includes an artifact that includes instructions for implementing the various aspects of the functions/acts specified in the one or more blocks in the flowcharts and/or the block diagrams.

The computer-readable program instructions may alternatively be loaded onto a computer, another programmable data processing apparatus, or another device, so that a series of operation steps are performed on the computer, the another programmable data processing apparatus, or the another device to produce a computer-implemented process. Therefore, the instructions executed on the computer, the another programmable data processing apparatus, or the another device implement the functions/actions specified in the one or more blocks in the flowcharts and/or block diagrams.

The flowcharts and block diagrams in the accompanying drawings show the system architecture, function, and operation of possible implementations of systems, methods, and computer program products according to various embodiments of this disclosure. In this regard, each block in the flowcharts or block diagrams may represent a module, a program segment, or a part of the instructions, and the module, the program segment, or the part of the instructions includes one or more executable instructions for implementing a specified logical function. In some alternative implementations, a function marked in the block may also occur in a sequence different from that marked in the accompanying drawings. For example, two consecutive blocks may actually be executed substantially in parallel, and may sometimes be executed in a reverse order, depending on a function involved. It should also be noted that each block in the block diagrams and/or flowcharts, and the combination of the blocks in the block diagrams and/or flowcharts may be implemented by a special-purpose hardware-based system that performs a specified function or act, or may be implemented by a combination of special-purpose hardware and computer instructions.

It should be understood that steps may be reordered, added, or deleted by using the foregoing various forms of processes. For example, the steps described in this disclosure may be performed in parallel, may be sequentially performed, or may be performed in a different order, provided that an expected result of the technical solutions of this disclosure can be implemented. This is not limited herein.

Although the subject matter is described in a language specific to structural features and/or method logic actions, it should be understood that the subject matter defined in the appended claims is not necessarily limited to the particular features or actions described above. On the contrary, the particular features and actions described above are merely example forms for implementing the claims.

## Claims

1. An intelligent driving method, comprising:
receiving, by an intelligent driving controller of a vehicle, perception information;
determining, based on the perception information, a speed change instruction for changing a speed of the vehicle; and
sending the speed change instruction to a motor control unit coupled to the intelligent driving controller.

2. The method according to claim 1, wherein the determining a speed change instruction comprises:
determining, based on the perception information, an acceleration instruction for accelerating the vehicle; and
the sending the speed change instruction comprises:
sending the acceleration instruction to the motor control unit, to accelerate the vehicle.

3. The method according to claim 1, wherein the determining a speed change instruction comprises:
calculating, based on the perception information, a deceleration torque for decelerating the vehicle;
determining one portion of the deceleration torque as a regenerative deceleration torque; and
determining, based on the regenerative deceleration torque, a deceleration instruction for decelerating the vehicle; and
the sending the speed change instruction comprises:
sending, to the motor control unit, the deceleration instruction that indicates the regenerative deceleration torque, to decelerate the vehicle.

4. The method according to claim 3, wherein the determining a speed change instruction further comprises:
determining the other portion of the deceleration torque as a hydraulic deceleration torque; and
the method further comprises:
sending, to a brake controller coupled to the intelligent driving controller, a torque signal that indicates the hydraulic deceleration torque, to decelerate the vehicle.

5. The method according to any one of claims 1 to 4, wherein the perception information is received from a perception module coupled to the intelligent driving controller.

6. An intelligent driving method, comprising:
receiving, by a motor control unit of a vehicle, a speed change instruction from an intelligent driving controller coupled to the motor control unit, wherein the speed change instruction is determined at the intelligent driving controller based on received perception information; and
controlling a rotational speed of a motor of the vehicle according to the speed change instruction.

7. The method according to claim 6, wherein the receiving a speed change instruction comprises:
receiving an acceleration instruction for accelerating the vehicle, wherein the acceleration instruction is determined based on the perception information; and
the controlling a rotational speed of a motor comprises:
controlling, according to the acceleration instruction, the motor to accelerate, to accelerate the vehicle.

8. The method according to claim 6, wherein the receiving a speed change instruction comprises:
receiving a deceleration instruction that indicates a regenerative deceleration torque, wherein the regenerative deceleration torque is one portion of a deceleration torque for decelerating the vehicle, and the deceleration torque is calculated based on the perception information; and
the controlling a rotational speed of a motor comprises:
controlling, according to the deceleration instruction, the motor to decelerate, to decelerate the vehicle.

9. The method according to claim 8, further comprising:
receiving, by the motor control unit from a brake controller coupled to the motor control unit, a torque signal that indicates a hydraulic deceleration torque, wherein the hydraulic deceleration torque is the other portion of the deceleration torque; and
controlling, based on the torque signal, the motor to decelerate, to decelerate the vehicle.

10. The method according to any one of claims 6 to 9, further comprising:
controlling the rotational speed of the motor of the vehicle based on a position of an accelerator pedal or a brake pedal of the vehicle, to decelerate the vehicle.

11. An intelligent driving apparatus, comprising:
an information receiving module, configured to receive perception information by an intelligent driving controller of a vehicle;
an instruction determining module, configured to determine, based on the perception information, a speed change instruction for changing a speed of the vehicle; and
an instruction sending module, configured to send the speed change instruction to a motor control unit coupled to the intelligent driving controller.

12. The apparatus according to claim 11, wherein the instruction determining module is configured to:
determine, based on the perception information, an acceleration instruction for accelerating the vehicle; and
the instruction sending module is configured to:
send the acceleration instruction to the motor control unit, to accelerate the vehicle.

13. The apparatus according to claim 11, wherein the instruction determining module is configured to:
calculate, based on the perception information, a deceleration torque for decelerating the vehicle;
determine one portion of the deceleration torque as a regenerative deceleration torque; and
determine, based on the regenerative deceleration torque, a deceleration instruction for decelerating the vehicle; and
the instruction sending module is configured to:
send, to the motor control unit, the deceleration instruction that indicates the regenerative deceleration torque, to decelerate the vehicle.

14. The apparatus according to claim 13, wherein the instruction determining module is further configured to:
determine the other portion of the deceleration torque as a hydraulic deceleration torque; and
the instruction sending module is further configured to:
send, to a brake controller coupled to the intelligent driving controller, a torque signal that indicates the hydraulic deceleration torque, to decelerate the vehicle.

15. The apparatus according to any one of claims 11 to 14, wherein the perception information is received from a perception module coupled to the intelligent driving controller.

16. A vehicle speed adjustment apparatus, comprising:
an instruction receiving module, configured to receive, by a motor control unit of a vehicle, a speed change instruction from an intelligent driving controller coupled to the motor control unit, wherein the speed change instruction is determined at the intelligent driving controller based on received perception information; and
a motor control module, configured to control a rotational speed of a motor of the vehicle according to the speed change instruction.

17. The apparatus according to claim 16, wherein the instruction receiving module is further configured to:
receive an acceleration instruction for accelerating the vehicle, wherein the acceleration instruction is determined based on the perception information; and
the motor control module is further configured to:
control, according to the acceleration instruction, the motor to accelerate, to accelerate the vehicle.

18. The apparatus according to claim 16, wherein the instruction receiving module is further configured to:
receive a deceleration instruction that indicates a regenerative deceleration torque, wherein the regenerative deceleration torque is one portion of a deceleration torque for decelerating the vehicle, and the deceleration torque is calculated based on the perception information; and
the motor control module is further configured to:
control, according to the deceleration instruction, the motor to decelerate, to decelerate the vehicle.

19. The apparatus according to claim 18, further comprising:
a signal receiving module, configured to receive, by the motor control unit from a brake controller coupled to the motor control unit, a torque signal that indicates a hydraulic deceleration torque, wherein the hydraulic deceleration torque is the other portion of the deceleration torque; and
the motor control module is further configured to:
control, based on the torque signal, the motor to decelerate, to decelerate the vehicle.

20. The apparatus according to any one of claims 16 to 19, wherein
the motor control unit is further configured to control the rotational speed of the motor of the vehicle based on a position of an accelerator pedal or a brake pedal of the vehicle, to decelerate the vehicle.

21. A computer-readable storage medium, wherein the computer-readable storage medium stores a computer program, wherein when the computer program is executed by a processor, the method according to any one of claims 1 to 10 is performed.
